# EUROPEAN PATENT SPECIFICATION

(11) **EP 0 970 983 B1**
(45) Date of publication and mention of the grant of the patent: **08.02.2006**
(21) Application number: 99305401.4
(22) Date of filing: 07.07.1999
(51) Int. Cl.: C08G 63/82

(54) **Preparation of polyesters using lithium titanyl oxalate polycondensation catalysts**
Darstellung von Polyestern unter Verwendung von Lithiumtitanyloxalat-Polykondensationskatalysatoren
Préparation de polyester utilisant des lithiumtitanyloxalates comme catalyseurs de polycondensation

(30) Priority: 07.07.1998 US 92032 P
(43) Date of publication of application: 12.01.2000
(73) Proprietor: Arkema Inc., Philadelphia, PA 19103-3222 (US)
(72) Inventor: Cannon, Kevin C., Hatboro, Pennsylvania 19040 (US); Seshadri, Sri R., Holland, Pennsylvania 18966 (US); Dirkx, Ryan R., Glenmoore, Pennsylvania 19343 (US)
(74) Representative: Stoner, Gerard Patrick

(56) References cited:
- DE-A- 2 635 662
- DATABASE WPI Section Ch, Week 196800 Derwent Publications Ltd., London, GB; Class A00, AN 1968-88934P XP002138343 & JP 42 013030 B (TOYM; TOYO BOSEKI KK)
- DATABASE WPI Section Ch, Week 197426 Derwent Publications Ltd., London, GB; Class A23, AN 1974-47978V XP002137729 & JP 49 021310 B (TOYO SPINNING CO LTD), 31 May 1974 (1974-05-31)
- DATABASE WPI Section Ch, Week 198745 Derwent Publications Ltd., London, GB; Class A23, AN 1987-317620 XP002137730 & JP 62 225524 A (TORAY IND INC), 3 October 1987 (1987-10-03)

## Description

This invention relates to the manufacture of polyesters, in particular, to using a lithium titanyl oxalate as the catalyst for such reaction to provide fast reactions with excellent color properties for the resulting polyester.

### BACKGROUND

Polycondensation reactions used conventionally in the manufacture of polyesters require an extremely long period of time without a catalyst. Therefore, various types of catalysts are used in order to shorten the reaction time. For example, antimony trioxide and manganese acetate are generally used.

Titanyl oxalate compounds have been suggested as catalysts for polycondensation reactions to produce polyesters. However, titanyl oxalate compounds when used as polycondensation catalysts in the manufacture of polyesters have caused color problems in the resulting polyester.

Polyesters are obtained by esterification, ester interchange or polycondensation of dibasic acids such as terephthalic acid and isophthalic acid or esters thereof, functional derivatives of acid chlorides and glycols such as ethylene glycol and tetramethylene glycol or oxides thereof and functional derivatives of carbonic acid derivatives. In this case, a single polyester is obtained when one dibasic acid component and glycol component is used. Mixed copolyesters can be obtained when at least two or more types of dibasic acid component and glycol component are mixed, esterified or subjected to ester interchange and then subjected to polycondensation. When a single polyester or two or more initial polycondensates of a mixed copolyester are subjected to polycondensation, an ordered polyester is obtained. In this invention, the term polyester is a general designation for these three types.

Previous literature has mentioned titanyl oxalate compounds for use as polycondensation catalysts for polyesters. The titanyl oxalate compounds mentioned include potassium titanyl oxalate, ammonium titanyl oxalate, lithium titanyl oxalate, sodium titanyl oxalate, calcium titanyl oxalate, strontium titanyl oxalate, barium titanyl oxalate, zinc titanyl oxalate and lead titanyl titanate. However, based upon the examples in such literature references, only potassium and ammonium titanyl oxalate have actually been used to catalyze the polyester forming reaction. See for example Japanese Patent Publication 42-13030, published on 25, July, 1967. European Patent application EP 0699700 A2 published o 3/6/1996 assigned to Hoechst and entitled "Process for production of Thermostable, Color-neutral, Antimony-Free Polyester and Products Manufactured From It" discloses the use as polycondensation catalyst, however only potassium titanyl oxalate and titanium isopropylate were used for such a catalyst, and, while improved color and antimony free polyester are disclosed, cobalt or optical brighteners were also employed. Lithium titanyl oxalate was not employed and the present invention's discovery of substantial color improvement with lithium titanyl oxalate verses potassium titanyl oxalate was not disclosed. Other patents have disclosed potassium titanyl oxalate as a polycondensation catalyst for making polyester such as U.S. Patent 4,245,086, inventor Keiichi Uno et al., Japanese Patent JP 06128464, Inventor Ishida, M. et al. U. S. Patent 3,957,886, entitled "Process of Producing Polyester Resin, Inventors Hideo, M. et al, at column 3, line 59 to column 4, line 10, contains a disclosure of titanyl oxalate catalysts for polyesters including a listing of many types of titanyl oxalate catalyst. However, only potassium titanyl oxalate and ammonium titanyl oxalate were used in the examples and lithium titanyl oxalate was not even listed among their preferred titanyl oxalate catalysts. JP-A-49/21310 discusses improving polyester whiteness with combinations of titanyl oxalate and antimony compounds. Lithium titanyl oxalates are mentioned but not used, and not associated specifically with the whiteness improvement.

The inventors have made the unexpected discovery that lithium titanyl oxalate catalysts enables production of polyester of improved colour compared with other titanyl oxalate catalysts, and without the presence of antimony. Accordingly, the invention provides use of lithium titanyl oxalate as polycondensation catalyst for providing a white colour polyester product in a process of catalysed polycondensation of polyester-forming reactants, in which no antimony is used as catalyst whereby an antimony-free polyester product results.

### Details

The production of polyester by polycondensation of polyester forming reactants is well known to those skilled. A catalyst is usually employed such as antimony oxide. Titanyl oxalate catalysts such as potassium titanyl oxalate and ammonium titanyl oxalate have also been suggested as catalysts for the polycondensation reaction to produce polyester. The present invention is based upon the discovery that one titanyl oxalate (lithium titanyl oxalate) is surprisingly superior in catalyst performance for polycondensation reactions by producing polyesters of superior color (white). The need for an antimony containing catalyst is thereby eliminated, and an antimony free polyester can thereby be produced with lithium titanyl oxalate as the catalyst. Such advantages provided by using lithium titanyl oxalate are retained when lithium titanyl oxalate is used in combination with other polycondensation catalysts for producing polyester as long as lithium titanyl oxalate comprises at least 10 parts per million based on the weight of titanium in the reaction mixture. Included within the meaning of the term "lithium titanyl oxalate" as used herein are di lithium titanyl oxalate [Li₂TiO(C₂O₄)₂] and mono lithium titanyl oxalate wherein one of the lithiums of di lithium titanyl oxalate is replaced with another alkaline metal such as potassium (e.g., LiKTiO(C₂O₄)₂) and such compounds with or without water of hydration.

Reactants for forming polyesters via a polycondensation reaction are well known to those skilled in the art and disclosed in patents such as U.S. Patent 5,198,530, inventor Kyber, M., et al., U.S. Patent 4,238,593, inventor B. Duh, U.S. Patent 4,356,299, inventor Cholod et al, and U.S. Patent 3,907,754, inventor Tershasy et al, to which reference should be made. The art is also described in "Comprehensive Polymer Science, Ed. G.C. Eastmond, et al, Pergamon Press, Oxford 1989, vol. 5, pp. 275-315, and by R.E. Wilfong, J. Polym. Science, 54 (1961), pp. 385-410. A particularly important commercial specie of polyester so produced is polyester terephthalate (PET).

A catalytically effective amount of lithium titanyl oxalate is added to the polyester forming reactants. Preferred is from 60 parts to 400 parts catalyst based on the weight of polyester forming reactants and based on the weight of titanium in the catalyst.

The superior performance of lithium titanyl oxalate against other titanyl oxalate catalysts for catalysing a polycondensation reaction to form polyester is established by the following examples.

### Preparation of polyethyleneterephthalate (PET) using DMT and ethylene glycol

305 g of dimethylterephthalate (DMT, 1.572 moles) and 221 g of ethylene glycol (3.565 moles) in the presence of 0.120 g Li₂TiO(C₂O₂)₂(H₂O)₄ (3.68 x 10⁻⁴ moles) are loaded into a 1.8 liter cylindrical reactor equipped with a bladed stirrer and a motor. The system is heated to 195°C at atmospheric pressure under nitrogen and maintained at this temperature for 90 minutes, continuously distilling off methanol as it is produced. The pressure is then reduced to 10 Pa (0.1 mbar) for 20 minutes. The reaction temperature is then raised to 275-280°C and maintained under these conditions for 2.5 hours. The polyester obtained is cooled by immersion in water. This rapid cooling resulted in the formation of a PET plug which could be easily removed from the broken glass reactor. The recovered PET plug was then granulated to simplify analysis.

### Preparation of PET using terephthalic acid and ethylene glycol

150 g of ethylene glycol (2.417 moles), 350 g of terephthalic acid (2.108 moles), and 0.120 g of Li₂TiO(C₂O₄)₂(H₂O)₄ (3.68 x 10⁻⁴ moles) are mixed into a reaction paste at 40°C. The paste is then added to an equal amount of agitated molten oligomer at 250°C in a vessel equipped with a column to collect distillates. The temperature is then raised to 265°C and maintained until no additional water is collected. The pressure is then reduced incrementally to 10 Pa (0.1 mbar) for 20 minutes. The reaction temperature is then raised to 275-280°C and maintained under these conditions for 2.5 hours. The polyester obtained is cooled by immersion in water. This rapid cooling resulted in the formation of a PET plug which could be easily removed from the broken glass reactor. The recovered PET plug was then granulated to simplify analysis.

### General Procedure for the Evaluation of Polycondensation Catalysts

Evaluation of catalysts was performed in an upright tubular glass reactor equipped with a stainless steel stirrer designed to produce a thin film on the walls of the reactor during polycondensation. Volatiles produced under reaction conditions were collected in a series of cold traps, from which they can be identified and quantified. The reactor and traps were attached to a manifold which permitted the contents of the apparatus to be placed under vacuum or inert atmosphere. Polyethyleneterephthalate (PET) was produced which is probably the most commercially important polyester produced today.

Bis(hydroxyethyl)terephthalate (BHET) and catalyst(s) were added to a reactor and, after evacuation to remove residual air and moisture, the reactor contents were then blanketed with nitrogen. The reactor and contents was then heated to 260°C by immersion into an oil bath. Temperature was monitored by a thermocouple on the outside wall of the reactor. At 260 °C, the reactor stirrer is activated to mix the melted BHET and the catalyst, and stirring at constant speed is maintained throughout the evaluation. The temperature and pressure inside the reactor were then adjusted incrementally to a final value of 280°C and 5 Pa (0.05 mbar); reactor contents were stirred for 2.5 hours under these conditions. After this time, the apparatus was placed under a nitrogen atmosphere, and the reactor was quickly immersed in a liquid nitrogen bath. This rapid cooling resulted in the formation of a PET plug which could be easily removed from the broken glass reactor. The recovered PET plug was then granulated to simplify analysis. Analyses for the PET samples produced is summarized in Table 1.

### Examples

### Example A. (Benchmark - antimony catalyst)

.42.72 grams of BHET and 0.0153 grams of Sb₂O₃ were reacted at a catalyst concentration of 299 ppm Sb according to procedure above.

### Example 1.

43.50 grams of BHET and 0.0212 grams of Li₂TiO(C₂O₄)₂(H₂O)₄ were reacted at a catalyst concentration of 79 ppm Ti according to the procedure above.

### Example 2.

39.87 grams of BHET and 0.0096 grams of Li₂TiO(C₂O₄)₂(H₂O)₄ were reacted at a catalyst concentration of 39 ppm Ti according to the procedure above.

### Example B.

42.98 grams of BHET and 0.0058 grams of K₂TiO(C₂O₄)₂(H₂O)₂ were reacted at a catalyst concentration of 19 ppm Ti according to the procedure above.

### Example C.

38.45 grams of BHET and 0.0108 grams of K₂TiO(C₂O₄)₂(H₂O)₂ were reacted at a catalyst concentration of 39 ppm Ti according to the procedure above.

### Example D.

42.98 grams of BHET and 0.0057 grams of K₂TiO(C₂O₄)₂(H₂O)₂ with 0.0035 grams of Co(O₂CCH₃)₂ were reacted at a catalyst concentration of 19 ppm Ti and 19 ppm Co according to the procedure above.

### Example E.

39.78 grams of BHET and 0.0078 grams of Cs₂TiO(C₂O₄)₂(H₂O)ₙ were reacted at a catalyst concentration of 19 ppm Ti according to the procedure above.

### Example F.

43.05 grams of BHET and 0.0057 grams of Na₂TiO(C₂O₄)₂(H₂O)ₙ were reacted at a catalyst concentration of 19 ppm Ti according to the procedure above.

**Table 1. Data for PET produced during catalyst evaluation. IV is the intrinsic viscosity, M_{w} is the weight average molecular weight, Mₙ is the number average molecular weight, and color was assigned by visual inspection.**

| Ex. # | Catalysts Evaluate | IV (dl/g) Color | Mw (g/mol) | Mn(g/mol) | Mw/Mn |
|---|---|---|---|---|---|
| A | Sb₂O₃, 299 ppm Sb | 0.743 white | 102100 | 50100 | 2.04 |
| I | Li₂TiO(C₂O₄)₂(H₂O)₄ @, 79 ppm Ti | 0.879 yellow | 105000 | 49200 | 2.13 |
| 2 | Li₂TiO(C₂O₄(H₂O)₄, @ 39 ppm Ti | 0.678 white | 85500 | 42900 | 1.99 |
| B | K₂TiO(C₂O₄)₂(H₂O)₂, @ 19 ppm Ti | 0.703 slight yellow | 95500 | 47300 | 2.02 |
| C | K₂TiO(C₂O₄)₂(H₂O)₂, @ 39 ppm Ti | yellow | 99100 | 47400 | 2.09 |
| D | K₂TiO(C₂O₄)₂(H₂O)₂/Co(OAc)₂ @ 19 ppm Ti/19 ppm Co | 0.678 purple/blue | 101300 | 49700 | 2.04 |
| E | Cs₂TiO(C₂O₄)₂(H₂O)ₙ, @ 19 ppm Ti | grey/green | 110400 | 54700 | 2.02 |
| F | Na₂TiO(C₂O₄)₂(H₂O)ₙ, @ 19 ppm Ti | grey/green | 74700 | 38500 | 1.94 |

## Claims

1. Use of lithium titanyl oxalate as polycondensation catalyst for providing a white colour polyester product in a process of catalysed polycondensation of polyester-forming reactants, in which no antimony is used as catalyst whereby an antimony-free polyester product results.

2. Use according to claim 1, wherein the amount of lithium titanyl oxalate present in the process is 10-200 parts per million based on the weight of titanium per part of polyester-forming reactant.

3. Use according to either one of claims 1 or 2, wherein the lithium titanyl oxalate is di-lithium titanyl oxalate.

4. Use according to either one of claims 1 or 2, wherein the lithium titanyl oxalate is mono-lithium titanyl oxalate.

5. Use according to claim 4, wherein the mono-lithium titanyl oxalate is LiKTiO(C₂O₄)₂.

6. Use according to any one of claims 3 to 5, wherein the lithium titanyl oxalate contains water of hydration.

7. Use according to claim 1, wherein the amount of lithium titanyl oxalate present in the process is at least 10 parts per million based on the weight of titanium in the reaction mixture.

## Patentansprüche

1. Verwendung von Lithiumtitanyloxalat als Polykondensationskatalysator zur Bereitstellung eines Polyesterproduktes mit weißer Farbe in einem Verfahren einer katalysierten Polykondensation von Polyester-bildenden Reaktanten, in dem kein Antimon als Katalysator verwendet wird, wodurch ein Antimonfreies Polyesterprodukt resultiert.

2. Verwendung nach Anspruch 1, wobei die Menge an Lithiumtitanyloxalat, die in dem Verfahren vorliegt, 10-200 Parts per Million, bezogen auf das Gewicht an Titan pro Teil an Polyester-bildendem Reaktant, ist.

3. Verwendung nach einem der Ansprüche 1 oder 2, wobei das Lithiumtitanyloxalat Dilithiumtitanyloxalat ist.

4. Verwendung nach einem der Ansprüche 1 oder 2, wobei das Lithiumtitanyloxalat Monolithiumtitanyloxalat ist.

5. Verwendung nach Anspruch 4, wobei das Monolithiumtitanyloxalat LiKTiO(C₂O₄)₂ ist.

6. Verwendung nach einem der Ansprüche 3 bis 5, wobei das Lithiumtitanyloxalat Hydratwasser enthält.

7. Verwendung nach Anspruch 1, wobei die Menge an Lithiumtitanyloxalat, die in dem Verfahren vorliegt, wenigstens 10 Parts per Million, bezogen auf das Gewicht an Titan in dem Reaktionsgemisch, ist.

## Revendications

1. Utilisation de titanyloxalate de lithium comme catalyseur de polycondensation pour obtenir comme produit un polyester de couleur blanche dans un procédé de polycondensation catalysée de corps réactionnels de formation de polyester, dans laqu elle aucune quantité d'antimoine n'est utilisée comme catalyseur, ce qui fait qu'il en résulte comme produit un polyester dépourvu d'antimoine.

2. Utilisation suivant la revendication 1, dans laquelle la quantité de titanyloxalate de lithium présente dans le procédé est comprise dans l'intervalle de 10 à 200 parties par million sur la base du poids du titane par partie de corps réactionnel de formation de polyester.

3. Utilisation suivant une des revendications 1 et 2, dans laquelle le titanyloxalate de lithium est le titanyloxalate de dilithium.

4. Utilisation suivant une des revendications 1 et 2, dans laquelle le titanyloxalate de lithium est le titanyloxalate de monolithium.

5. Utilisation suivant la revendication 4, dans laquelle le titanyloxalate de monolithium es t le LiKTiO (C₂O₄)₂.

6. Utilisation suivant l'une quelconque des revendications 3 à 5, dans laquelle le titanyloxalate de lithium contient de l'eau d'hydratation.

7. Utilisation suivant la revendication 1, dans laquelle la quantité de titanyloxalate de lithium présente dans le procédé est d'au moins 10 parties par million sur la base du poids de titane dans le mélange réactionnel.
